(19) **Europäisches Patentamt**

**European Patent Office**

**Office européen des brevets**

(11) **EP 0 561 270 B2**

(12) ## NEUE EUROPÄISCHE PATENTSCHRIFT

(45) Veröffentlichungstag und Bekanntmachung des Hinweises auf die Entscheidung über den Einspruch:
**30.08.2000  Patentblatt 2000/35**

(51) Int. Cl.[7]: **B28B 1/52**, B28B 17/02, C04B 40/00, C04B 28/14

(45) Hinweis auf die Patenterteilung:
**06.08.1997  Patentblatt 1997/32**

(21) Anmeldenummer: **93103900.2**

(22) Anmeldetag: **10.03.1993**

(54) **Verfahren zur Herstellung von Faserverbundwerkstoffen, insbesondere Doppelbodenplatten**

Process for making fibers reinforced composite elements, in particular double bottom panels

Procédé pour la fabrication d'éléments en matériau composite renforcé par des fibres, en particulier de panneaux doubles de plancher

(84) Benannte Vertragsstaaten:
**AT BE CH DE ES FR GB IT LI NL**

(30) Priorität: **19.03.1992 DE 4208826**
**19.11.1992 DE 4239033**

(43) Veröffentlichungstag der Anmeldung:
**22.09.1993  Patentblatt 1993/38**

(73) Patentinhaber:
**FRAUNHOFER-GESELLSCHAFT ZUR FÖRDERUNG DER ANGEWANDTEN FORSCHUNG E.V.**
**80636 München (DE)**

(72) Erfinder:
• **Sattler, Heinz, Dr.-Ing.**
  **D-38108 Braunschweig (DE)**
• **Thole, Volker, Dipl.-Ing.**
  **D-38118 Braunschweig (DE)**
• **Pallhorn, Sebald, Dipl.-Ing.**
  **D-63773 Goldbach (DE)**
• **Schmelmer, Bernhard**
  **D-63839 Kleinwallstadt (DE)**

(74) Vertreter:
**Pfenning, Meinig & Partner**
**Mozartstrasse 17**
**80336 München (DE)**

(56) Entgegenhaltungen:
EP-A- 0 260 342          EP-A- 0 415 184
EP-A- 0 501 103          WO-A-89/06592
BE-A- 671 648            DE-A- 3 216 886

• **ZEMENT-KALK-GIPS INTERNATIONAL, Bd. 43, Nr. 4, April 1990, WIESBADEN, DE, Seiten 209-213, A. DUDA: "ENTWICKLUNG DES GIPSMATRIXGEFÜGES IN GIPSGEBUNDENEN SPANPLATTEN"**

EP 0 561 270 B2

**Beschreibung**

Die Erfindung betrifft ein Verfahren zur Herstellung von Faserverbundwerkstoffen, insbesondere Doppelbodenplatten, gemäß dem Oberbegriff des Hauptanspruches.

Faserverbundwerkstoffe mit anorganischen Bindemitteln werden zu einem großen Teil in einem sogenannten Naßverfahren hergestellt. Das Naßverfahren wird so durchgeführt, daß aus wasserreichen Suspensionen über einen Siebzylinder oder einen Direktstoffauflauf auf ein umlaufendes Sieb- oder Filzband durch eine Teilentwässerung ein sehr dünnes endloses Vlies entsteht, welches auf einer Formatwalze zu einem mehrschichtigen dickeren Plattenvlies gewickelt wird.

Nach dem Erreichen einer der Plattensolldicke entsprechenden Vliesdicke wird das Vlies von der Formatwalze beginnend von einer Trennlinie abgewickelt. Das Naßverfahren hat den Vorteil einer funktionalen Stoffverteilung und Faserorientierung, ist dabei jedoch mit einer ganzen Reihe von Nachteilen behaftet. Dazu gehören Aufwendigkeit des Verfahrens, Entwässerungs- und Abwasserproblem, zwingende Mehrschichtigkeit der Platten, Notwendigkeit der Umformung des Vlieses von der Zylinderwicklung in die Plattenform und schließlich die Begrenzung der Plattendicke.

Daneben existieren Halbtrockenverfahren, teilweise auch als Trockenverfahren bezeichnet, zur Herstellung von Verbundwerkstoffen. Diese Verfahren versuchen die Nachteile des Naßverfahrens zu vermeiden. KLOS (Asbestzement, Technologie und Projektierung, Springer-Verlag 1967) beschreibt u.a. ein Verfahren, nach dem das Asbest-Faser-Zementgemisch während des Streuens auf eine trockene oder eine mit Wasser angefeuchtete Unterlage mit Wasser besprüht wird. Ein weiterer Vorschlag zur Durchführung des Verfahrens basiert auf dem Durchfeuchten der schwach angefeuchteten Mischung, indem diese durch eine Siebtrommel oder durch ein Rüttelsieb geleitet wird. Ferner wird ein Verfahren beschrieben, nach dem abwechselnd trockene und flüssige Gemischschichten auf ein Band abgelegt und dann verdichtet werden. Auch das Hindurchführen eines trockenen oder halbtrockenen Stoffvlieses zwischen zwei Transportbändern und das Befeuchten des Stoffvlieses durch einen umlaufenden, mit Flüssigkeit gespeisten Siebzylinder wird in der oben genannten Literaturstelle geschildert.

Ferner ist eine Anzahl von Vorschlägen zur Herstellung von Fasergips- und Faserzementplatten bekannt.

Die **DE-A-30 15 734** beschreibt ein Verfahren zum Herstellen von faserverstärkten Platten, wobei ein wäßriger Schlamm aus Zement und Fasern einem Filtertuch aufgegeben wird, danach Überschußwasser abgezogen und mehrere feuchte Schichten zu einem mehrlagigen Produkt kombiniert werden. Damit die herzustellenden Platten die gewünschten Eigenschaften aufweisen, muß dem wäßrigen Schlamm ein feines Material, dessen Korngröße kleiner als die der Zementteilchen ist, zugesetzt werden.

Die **DE-A-28 54 506** offenbart ein Verfahren zur Herstellung einer asbestfreien Bauplatte, die aus Cellulosefasern und/oder Altpapier, hydraulischem Bindemittel und gegebenenfalls anorganischen oder organischen Zusatzfasern und/oder mineralischen Zuschlagstoffen besteht, wobei die Cellulosefasern und/oder das Altpapier auf einen Mahlgrad von 30-70° SR gebracht wurden.

Daneben beschreibt die **CH-A-505 674** ein Verfahren zur kontinuierlichen Herstellung von Formkörpern aus Gips und voluminösen verfilzenden Fasern durch Aufbringen des trockenen Materials auf eine sich endlos bewegende Formfläche und Befeuchten des Materials mit einer solchen Wassermenge, die wenig über der zur Abbindung notwendigen Menge liegt, wobei die Dosierung und Verteilung der trockenen Materialien aus Vorratssilos auf ein dem Formband vorgelagertes Vorformband so erfolgen, daß ein zweischichtiger lockerer Strang entsteht, der aus einem Faserbett und einem darauf oder darunter liegenden Gipsbett gebildet wird, und die beiden Schichten des Stranges in vertikaler Richtung miteinander vermischt werden, bevor die Zuführung des Abbindewassers während oder nach der Überführung des Stranges vom Vorformband auf das Formband erfolgt und anschließend verdichtet wird.

Die **DE-A-34 04 658** bezieht sich auf ein Verfahren zur kontinuierlichen Herstellung von Platten aus Gips und Faserstoff, wobei in einem ersten Mischvorgang die Befeuchtung erfolgt. Die Wasserzugabe wird bei diesem Verfahren so geregelt, daß die Dosierung des Trockengemisches vor dem zweiten Mischvorgang volumetrisch oder gewichtsmäßig vorgenommen wird.

Aus der **DE-A-27 51 466** ist ein Verfahren zur Herstellung von Platten aus Faserwerkstoffen und Gips bekannt, nach dem das Preßgut auf ein bewegtes Siebband aufgestreut, in feiner Verteilung benetzt und entwässert wird, wobei das Wasser während der Siebbandbewegung auf das fertiggestreute Preßgut aufgegeben, worauf anschließend eine Saugwirkung ausgeübt und das Preßgut entwässert wird.

Die **DE-A-32 47 009** betrifft ein Verfahren zur Herstellung von Platten aus Abbindewasser enthaltenden Teilchen und pulverförmigem Gips, die auf einer bewegten Unterlage ein Vlies bilden, welches zu einem Plattenstrang gepreßt wird, wobei den Teilchen zunächst das Abbindewasser zugesetzt wird und diese erst unmittelbar vor dem Mischen mit dem Gips zusammengebracht werden. Das homogene Mischen von Gips und Teilchen erfolgt während des Fallweges auf die Unterlage.

Zusammenfassend kann festgestellt werden, daß die bekannten Naßverfahren und Halbtrockenverfahren die Forderungen einer optimalen und funktionalen Stoffverteilung, insbesondere Faserorientierung, nicht erfüllen können. Entsprechend gering sind demnach die Festigkeitswerte der hergestellten Platten, die bei vergleichbarer Materialzusammensetzung nur Biegefestigkeiten von höchstens 50 % (6...8 N/mm$^2$) des möglichen Maximums aufweisen. Dies bedeutet, daß von den in der Platte vorhandenen Fasern nur ein kleiner Teil für die Erhöhung der Biegefestigkeit bzw. Bewehrungswirkung genutzt werden kann. Mit dem Ziel, höhere Festigkeitswerte zu erreichen, wird üblicherweise das Faser-Bindemittel-Verhältnis bei gleichem Wasser-Bindemittel-Verhältnis erhöht, was zur Folge hat, daß die Streufähigkeit des Stoffgemisches zwar verbessert wird, aber die durch den höheren Faseranteil hervorgerufenen größeren Rückstellkräfte und geringeren Querzugfestigkeiten der Platten verhindern eine Biegefestigkeitszunahme bei gleichzeitiger Verschlechterung des Brandverhaltens. Unter diesen Bedingungen sind nur Platten herstellbar, deren Dichte unterhalb des Optimums und dementsprechend die Festigkeiten unterhalb des Maximums liegen. Ihre Anwendung für hochbeanspruchte Werkstoffe, z.B. Doppelbodenplatten, ist dadurch nicht oder nur sehr begrenzt möglich.

Die anwendungsrelevanten Nachteile von nach bekannten Halbtrockenverfahren und Naßverfahren hergestellten Faserverbundwerkstoffen sind das Ergebnis von Vorgehensweisen, die einzelne Eigenschaften zwar verbessern können, im Hinblick auf die für die Doppelbodenplatten geforderte Gesamtheit von Eigenschaften, jedoch untauglich sind, um den konträren Einfluß des Wasser-Bindemittel-Verhältnisses (Prozeßwasser) auf die Streufähigkeit (Stoffverteilung), die Hydratbildung und die Werkstoffeigenschaften im nach Anspruch 1 definierten Verdichtungszustand zu berücksichtigen.

Ferner kann aufgrund der noch hohen freien Feuchte dieser Platten (15 bis 27 M%) auf eine technische Trocknung nicht verzichtet werden.

Hier setzt die vorliegende Erfindung ein, deren Ziel es ist, ein Verfahren zur Herstellung von Verbundwerkstoffen auf der Basis von durch Hydratbildung erhärtenden Bindemitteln und Fasern zur Verfügung zu stellen, wobei der Prozeßwasserbedarf und der freie Restwassergehalt im fertigen Produkt erheblich reduziert werden soll. Das Verfahren soll weiter dazu geeignet sein, unter Vermeidung der Mehrschichtigkeit Platten mit einer Biegefestigkeit herzustellen, die deutlich über der des Standes der Technik liegt.

Die Aufgabe wird durch die kennzeichnenden Merkmale des Anspruches 1 gelöst.

In den Ansprüchen 2 bis 10 sind vorteilhafte Weiterbildungen bezüglich des Verfahrens angegeben.

Überraschenderweise hat sich gezeigt, daß durch eine gezielte Steuerung des Wasser-Bindemittel-Verhältnisses w im Zusammenhang mit dem Hydrat-Wasser-Bindemittel-Verhältnis $w_O$ sowie in Kombination mit den Verfahrensschritten und einer gezielten Verdichtung der Platten Verbundwerkstoffe hergestellt werden können, deren Biegefestigkeit über 15 N/mm$^2$ liegt.

Die Erfindung schließt dabei alle gängigen Bindemittel und Fasern, die aus dem Stand der Technik für die Herstellung von Faser-Verbundwerkstoffen bekannt sind, mit ein. Bevorzugt wird das Verfahren mit β-Halbhydratgips als Bindemittel sowie mit cellulosehaltigen Fasern durchgeführt.

Erfindungsgemäß wird beim Verfahren nun so vorgegangen, daß das Wasser-Bindemittel-Verhältnis w im Vergleich zum Hydrat-Wasser-Bindemittel-Verhältnis bei vollständiger Hydratation $w_O$ auf $w \leq 1,5\ w_O$ reduziert wird. Bevorzugterweise wird dabei ein Verhältnis von $w \leq 1,2\ w_O$ eingehalten. Die Definition $w \leq 1,5\ w_O$ schließt dabei Werte mit $w \leq w_O$ nicht aus, da auch bei Verwendung eines nicht stöchiometrischen Wasserverhältnisses noch ausreichende Festigkeiten des fertigen Produktes erzielt werden. Es hat sich aber in Versuchen gezeigt, daß es besonders günstig ist, wenn w ca. $1,2\ w_O$ ist. Die Erfindung schließt aber alle Werte von $w \leq 1,5\ w_O$ mit ein.

Erfindungswesentlich ist nun, daß in einem ersten Verfahrensschritt (Anspruch 1, Merkmal a) ein Mischen aller Einsatzstoffe unter Einhaltung des geforderten Wasser-Bindemittel-Verhältnisses erfolgt. Überraschenderweise hat es sich gezeigt, daß es dabei ausreichend ist, wenn die Mischung aller Einsatzstoffe nur über eine kurze Zeitspanne, d.h. über wenige Sekunden bis maximal eine Minute, erfolgt. Vorteilhafterweise wird der Mischvorgang nur über eine Zeitspanne von höchstens 5 s durchgeführt. Die Einhaltung dieser Bedingung hat sich für den weiteren Prozeßverlauf als besonders günstig erwiesen.

Eine weitere vorteilhafte Ausgestaltung der Erfindung (Anspruch 3) sieht vor, daß der Verfahrensschritt a in zwei Teilbereiche aufgeteilt wird. Danach ist es vorteilhaft, wenn zuerst eine Mischung des Bindemittels mit den Fasern erfolgt und dann die Wasserzugabe anschließend vorgenommen wird. Nach der Wasserzugabe erfolgt dann ein erneutes Durchmischen. Mit dieser Maßnahme wird eine optimale Verteilung aller Einsatzstoffe erreicht. Dies wirkt sich besonders günstig bei der Hydratation und somit bei der erreichbaren Festigkeit aus.

Die vorteilhafte Maßnahme gemäß Anspruch 8 - die Zugabe von Additiven - bewirkt eine optimale Durchfeuchtung und Verteilung des Anmachwassers.

Die auf diese Weise hergestellte Frischmasse wird nun homogen zu einem Vlies gestreut. Die Höhe des Vlieses richtet sich dabei nach der gewünschten Solldicke $d_{soll}$ der herzustellenden Platte unter Berücksichtigung der angestrebten Rohdichte ρ, die mindestens $0,9\ \rho_O$ betragen muß. Die Vlieshöhe der Platte muß demnach das zirka Fünf- bis Zehnfache der Plattensolldicke betragen.

Gemäß einer weiteren Ausgestaltung der Erfindung (Anspruch 9) wird vorgeschlagen, daß die Vliesbildung (Formgebung) mittels Separier- bzw. Mahlaggregaten erfolgt. Diese Maßnahme ist dahingehend vorteilhaft, daß sie die Bildung von Agglomeraten verhindert bzw. diese auflöst. Zu diesem Zweck durchläuft die Frischmasse unmittelbar vor der Vliesbildung z.B. eine Schlagkreuzmühle, so daß eine Homogenisierung derselben erreicht wird.

Erfindungswesentlich ist weiterhin nun, daß das so ausgestreute Vlies auf mindestens 0,9 $\rho_O$ verdichtet wird. Diese Verdichtung wird z.B. mittels einer Presse erreicht. Die Erfindung schließt selbstverständlich jegliche Vorrichtung mit ein, die dazu geeignet ist, auf das Vlies einen entsprechenden Druck auszuüben. Die Ausübung dieses Flächendruckes gewährleistet eine optimale Verteilung des Anmachwassers im Vlies. Damit kann eine nahezu vollständige Hydratation einsetzen.

Die auf diese Weise gebildete Platte verbleibt dann bis zum Hydratationsende in einem Verdichtungszustand (Merkmal 1d), für den die Aufrechterhaltung der konstanten Plattendicke ($d_{soll}$) und ein von der Hydratationszeit des Bindemittels abhängiger Druckabfall bis auf einen Restdruck nahe Null kennzeichnend ist. Die auf diese Weise hergestellte Platte besitzt dann unmittelbar nach der Entnahme aus der Presse nur noch max. 5 % freies Wasser und bedarf bis zur Einstellung des Gleichgewichtszustandes nur noch einer sehr kurzen oder keiner Trocknung.

Die Erfindung schließt auch die Herstellung von Verbundwerkstoffen geringerer Dichte als 0,9 $\rho_O$ mit ein (Anspruch 4). Erfindungsgemäß wird dazu frühestens 5 s nach dem Verdichten auf eine Dichte ≥ 0,9 $\rho_O$ eine Entspannung des Stoffvlieses auf minimal 0,5 $\rho_O$ durchgeführt. Dies wird dadurch erreicht, daß die Presse für die entsprechende Zeit geöffnet wird. In diesem Fall tritt dann eine Rückfederung des Fasermaterials ein. Durch diese einfache Maßnahme ist somit nun gewährleistet, daß mittels des erfindungsgemäßen Verfahrens auch Verbundwerkstoffe mit geringerer Dichte hergestellt werden können.

Es hat sich nun gezeigt, daß die nach dem vorstehend beschriebenen Verfahren hergestellten Platten ausgezeichnete Eigenschaften in bezug auf die Nennlast, Biegefestigkeit und E-Modul aufweisen. Die erfindungsgemäß hergestellten Platten weisen dabei eine Nennlast von mehr als 3000 N bei 2 mm Durchbiegung auf, was einer Biegefestigkeit von mehr als 15 N/mm$^2$ und einem E-Modul von mehr als 10 KN/mm$^2$ entspricht. Damit stehen erstmalig Platten zur Verfügung, die für extrem hohe Belastungen ausgelegt sind. Die erfindungsgemäß hergestellten Platten eignen sich demnach besonders gut als Doppelbodenplatten für höchste Beanspruchungen. Die Dicke der Platten kann dabei je nach Anforderung zwischen 20 und 50 mm variieren.

Die Erfindung wird anhand von sechs Beispielen näher erläutert.

**Beispiel 1:**

Altpapier der Gruppe II/E12 wird mittels Trommelhakker zu Papierschnitzeln von ca. 20x20 mm$^2$ zerkleinert und anschließend mittels einer Mühle zu Fasern ($R_F$ = 1,5 g/cm$^3$) aufbereitet. Ein handelsüblicher Stuckgips (mit ca. 85 % β-Halbhydratanteil, $R_B$ = 2,63 g/cm$^3$) wird mit 15 Masse-% ($x_F$ = 0,15) dieser Fasern innig vermischt. Dieser Trockenmasse wird das Anmachwasser w = 1,5$w_O$ = 0,25, das zur Abbindesteuerung Additive enthält, feinverteilt zugemischt. Unmittelbar nach dieser Wasserzugabe wird die Frischmasse zur Vliesbildung nochmals aufgemahlen oder aufgelockert und auf eine Unterlage gestreut. Nach dem Streuvorgang beträgt die Vlieshöhe für die Plattendicke von $d_{soll}$ = 36 mm und einer Trockenrohdichte von 1690 kg/m$^3$ ca. 250 mm. Das Vlies wird mittels einer Presse auf eine Vlieshöhe von $d_{soll}$ verdichtet. Die auf diese Weise gebildete Platte verbleibt bis zum Hydratationsende im nach Anspruch 1 definierten Verdichtungszustand. Die Platte besitzt unmittelbar nach der Entnahme aus der Presse noch rund 5 % freies Wasser und bedarf bis zum Gleichgewichtszustand 20°C/65 % rel.Lf. (entspricht rund 2,5 % Feuchte) nur einer sehr kurzen Trocknung.

Die entsprechend der RAL-Vorschrift (RAL-GZ 941) erfolgte Prüfung ergibt eine Nennlast von mehr als 5000 N bei einer Durchbiegung von 2 mm. Die dementsprechende Biegefestigkeit beträgt mehr als 28 N/mm$^2$.

**Beispiel 2:**

Gemäß Beispiel 1 wird durch eine entsprechende Entspannung nach Anspruch 4 eine Platte mit einer Trockenrohdichte von 1550 kg/m$^3$ hergestellt. Die Prüfung nach RAL ergibt eine Nennlast von mehr als 4000 N bei 2 mm Durchbiegung. Die entsprechende Biegefestigkeit über 22 N/mm$^2$.

**Beispiel 3:**

Papierschnitzel werden mit einem Masseanteil von 15 % (bezogen auf das Bindemittel) mit diesem nach einem Vormischprozeß in einer Mühle gemeinsam vermahlen. Das Bindemittel besteht zu 70 % aus Stuckgips, zu 25 % aus Hüttensand (bindemittelfein) und zu 5 % aus Portlandzement. Wasserzugabe und Verdichtung erfolgen nach Beispiel 1. Mit dem Hydrationsende des Stuckgipses ist die erzeugte Platte weitgehend formstabil und manipulierbar, bedarf aber zur Hydratation der hydraulischen Komponente einer Reifelagerung von ca. 28 Tagen. Nach kurzer Trocknung ergeben sich bei einer Rohdichte von 1550 kg/m$^3$ Nennlasten von mehr als 4500 N bei 2 mm Durchbiegung, und die Biegefestigkeit beträgt mehr als 25 N/mm$^2$.

**Beispiel 4:**

Beispiel 1 wird dahingehend modifiziert, daß der Faserstoff einen Anteil von 10 Masse-% und die Rohdichte 1600 kg/m$^3$ aufweisen. Die Nennlast beträgt mehr als 3500 N bei 2 mm Durchbiegung. Die Biegefestigkeit beträgt mehr als 20 N/mm$^2$.

**Beispiel 5:**

Herstellung einer Platte gemäß Beispiel 1, jedoch mit verringertem Wasser-Bindemittel-Verhältnis von w = 1,2w$_O$ = 0,20. Die Dichte der fertigen Platte (im nach Anspruch 1 definierten Zustand) beträgt 1800 kg/m$^3$. Die Platte besitzt unmittelbar nach Entnahme aus der Presse noch rund 2,3 % freies Wasser, was dem praktischen Gleichgewichtszustand 20°C/65 % rel.Lf. entspricht. Eine Trocknung der Platte ist nicht mehr erforderlich.

Die entsprechend der RAL-Vorschrift (RAL-GZ 941) erfolgte Prüfung ergibt eine Nennlast von mehr als 6000 N bei 2 mm Durchbiegung und eine Bruchlast von mehr als 13000 N. Die entsprechende Biegefestigkeit beträgt mehr als 30 N/mm$^2$.

**Beispiel 6**:

Platte wie nach Beispiel 5 hergestellt, jedoch betrug ihre Dichte nach einer entsprechenden Entspannung gemäß Anspruch 2 nur noch 1500 kg/m$^3$. Die Nennlast betrug mehr als 4000 N bei 2 mm Durchbiegung, die Biegefestigkeit mehr als 23 N/mm$^2$.

**Patentansprüche**

1. Verfahren zur Herstellung von Verbundwerkstoffen, insbesondere Doppelbodenplatten, aus durch Hydratbildung mit Anmachwasser erhärtenden Bindemitteln und Fasern (Einsatzstoffe), wobei die Fasern durch ihre Reindichte ($R_F$), das Bindemittel durch die Reindichte ($R_B$), das Hydratwasser-Bindemittel-Verhältnis bei vollständiger Hydratation durch ($w_O$), das Stoffgemisch durch das Faser-Bindemittel-Verhältnis ($x_F$) und das Wasser-Bindemittel-Verhältnis (w) charakterisiert sind und die Trockenrohdichte im gefügedichten Zustand $\rho_O$ durch die Beziehung

$$\rho_O = \frac{1 + w_o + x_F}{\dfrac{1}{R_B} + \dfrac{x_F}{R_F} + w}$$

definiert ist,
dadurch **gekennzeichnet,**
daß

a) alle Einsatzstoffe gemischt werden, wobei das Wasser-Bindemittel-Verhältnis w ≤ 1,5 w$_O$ ist, und wobei die Mischung aller Einsatzstoffe über wenige Sekunden bis maximal 1 Minute erfolgt,

b) die so hergestellte Frischmasse in Form eines Vlieses homogen ausgestreut wird,

c) das Vlies auf eine Rohdichte von mindestens 0,9 $\rho_O$ verdichtet wird, und daß

d) eine anschließende Aushärtungsphase unter Druck erfolgt bis zum Hydratationsende.

2. Verfahren nach Anspruch 1,
dadurch gekennzeichnet, daß der Mischvorgang während des Verfahrensschrittes a über eine Zeitspanne von höchstens 5 s erfolgt.

3. Verfahren nach Anspruch 1 und 2,
dadurch gekennzeichnet, daß beim Verfahrensschritt a zuerst eine Mischung des Bindemittels mit den Fasern erfolgt und anschließend die Wasserzugabe vorgenommen wird.

4. Verfahren nach Anspruch 1 bis 3,
dadurch gekennzeichnet, daß zur Herstellung von Verbundwerkstoffen geringerer Dichte als 0,9 $\rho_O$ frühestens 5 s nach demn Verfahrensschritt c eine Entspannung (Rückfederung) des Stoffvlieses auf minimal 0,5 $\rho_O$ erfolgt.

5. Verfahren nach Anspruch 1 bis 4,
dadurch gekennzeichnet, daß das Wasser-Bindemittel-Verhältnis w bevorzugt ≤ 1,2 w$_O$ ist.

6. Verfahren nach Anspruch 1 bis 5,
dadurch gekennzeichnet, daß als Bindemittel β-Halbhydratgips verwendet wird.

7. Verfahren nach Anspruch 1 bis 6,
dadurch gekennzeichnet, daß als Faserstoff vorwiegend cellulosehaltige Fasern eingesetzt werden.

8. Verfahren nach Anspruch 1 bis 7,
dadurch gekennzeichnet, daß während des Mischvorganges (Verfahrensschritt a) der Frischmasse oder dem Anmachwasser Additive wie Netzmittel zugegeben werden.

9. Verfahren nach Anspruch 1 bis 8,
dadurch gekennzeichnet, daß die Vliesbildung mittels Separier- bzw. Mahlaggregaten erfolgt.

10. Verfahren nach Anspruch 1 bis 9,
dadurch gekennzeichnet, daß die Frischmasse unmittelbar vor der Vliesbildung eine Schlagkreuzmühle od.dgl. durchläuft.

## Claims

1. Process for producing composites, especially double-bottom panels, from binders that harden through hydrate formation with mixing water and fibres (ingredients), the fibres being characterized by their density ($R_F$), the binder by its density ($R_B$), the hydrate water/binder ratio at complete hydration by ($w_0$), and the mix by the fibre/binder ratio ($x_F$) and the water/ binder ratio (w) and the dry bulk density $\rho_0$ in the close-structured state being defined by the relation

$$\rho_0 = \frac{1 + w_0 + x_F}{\dfrac{1}{R_B} + \dfrac{x_F}{R_F} + w}$$

**characterized in that**

a) all the ingredients are mixed, the water/binder ratio being $w \leq 1.5\,w_0$, and the mixing of all the ingredients being effected for a period of from a few seconds to not more than 1 minute,
b) the resulting green mass is sprinkled out homogeneously in the form of a web,
c) the web is densified to a bulk density of at least $0.9\,\rho_0$, and in that
d) a subsequent hardening phase takes place under pressure until hydration has ended.

2. Process according to Claim 1, characterized in that the mixing operation during process step a is effected for a period of not more than 5 s.

3. Process according to Claim 1 and 2, characterized in that, in process step a, first the binder is mixed with the fibres and then the water is added.

4. Process according to Claim 1 to 3, characterized in that composites of lower density than $0.9\,\rho_0$ are produced by allowing the web to decompress (rebound) to not less than $0.5\,\rho_0$ not earlier than 5 s after process step c.

5. Process according to Claim 1 to 4, characterized in that the water/binder ratio w is preferably $\leq 1.2\,w_0$.

6. Process according to Claim 1 to 5, characterized in that the binder used is β-hemihydrate gypsum.

7. Process according to Claim 1 to 6, characterized in that the fibres used are predominantly cellulosic fibres.

8. Process according to Claim 1 to 7, characterized in that additives such as wetting agents are added to the green mass or the mixing water during the mixing operation (process step a).

9. Process according to Claim 1 to 8, characterized in that web formation is effected by means of separating or grinding apparatus.

10. Process according to Claim 1 to 9, characterized in that the green mass passes through a cross-beater mill or the like immediately prior to web formation.

## Revendications

1. Procédé de fabrication de matériaux composites, notamment de panneaux de plancher doubles, à partir de liants durcissant par formation d'hydrate avec de l'eau de gâchage, et de fibres (ingrédients), les fibres étant caractérisées par leur densité absolue ($R_F$), le liant par la densité absolue ($R_B$), le rapport eau d'hydratation-liant à l'hydratation totale par ($w_0$), le mélange de matières par le rapport fibres-liant ($x_F$) et le rapport eau-liant (w) et la densité apparente sèche à l'état compact $\rho_0$ par la relation

$$\rho_0 = \frac{1 + w_0 + x_F}{\dfrac{1}{R_B} + \dfrac{x_F}{R_F} + w}$$

caractérisé
en ce que

a) on mélange tous les ingrédients, le rapport eau-liant étant $w \leq 1,5\,w_0$ et le mélange de tous les ingrédients s'effectuant dans un temps allant de quelques secondes à 1 minute au maximum,
b) on répand la masse fraîche ainsi produite de façon homogène pour former une nappe,
c) on comprime la nappe à une densité apparente d'au moins $0,9\,\rho_0$ et en ce que
d) on procède à une phase de durcissement consécutive sous pression jusqu'à la fin de l'hydratation.

**2.** Procédé selon la revendication 1, caractérisé en ce que l'opération de mélange s'effectue pendant la phase $\underline{a}$ du procédé, en un laps de temps de 5 s au maximum.

**3.** Procédé selon les revendications 1 et 2, caractérisé en ce que, dans la phase $\underline{a}$ du procédé, on effectue tout d'abord un mélange du liant avec les fibres et, ensuite, on procède à l'addition d'eau.

**4.** Procédé selon les revendications 1 à 3, caractérisé en ce que, pour la fabrication de matériaux composites d'une densité inférieure à 0,9 $\rho_0$, on effectue, au plus tôt 5 s après la phase $\underline{c}$ du procédé, à une détente (retour élastique) de la nappe de matière à une valeur de 0,5 $\rho_0$ au minimum.

**5.** Procédé selon les revendications 1 à 4, caractérisé en ce que le rapport eau-liant $\underline{w}$ est de préférence $\leq 1,2\ w_0$.

**6.** Procédé selon les revendications 1 à 5, caractérisé en ce qu'on utilise comme liant du plâtre semi-hydraté $\beta$.

**7.** Procédé selon les revendications 1 à 6, caractérisé en ce qu'on utilise principalement comme matière fibreuse des fibres contenant de la cellulose.

**8.** Procédé selon les revendications 1 à 7, caractérisé en ce que, pendant l'opération de mélange (phase $\underline{a}$ du procédé), on ajoute à la nasse fraîche ou à l'eau de gâchage des additifs tels que des agents mouillants.

**9.** Procédé selon les revendications 1 à 8, caractérisé en ce que la formation de la nappe s'effectue au moyen d'appareils de séparation et de broyage.

**10.** Procédé selon les revendications 1 à 9, caractérisé en ce que la nasse fraîche passe dans un broyeur à marteaux en croix ou équivalent immédiatement avant la formation de la nappe.